# EUROPÄISCHE PATENTSCHRIFT

(11) **EP 3 501 246 B1**
(45) Veröffentlichungstag und Bekanntmachung des Hinweises auf die Patenterteilung: **28.04.2021**
(21) Anmeldenummer: 18209570.3
(22) Anmeldetag: 30.11.2018
(51) Int. Cl.: A01B 35/28, A01B 15/06, A01B 49/02

(54) **GRUBBERSCHARMODUL FÜR EINE BODENBEARBEITUNGSVORRICHTUNG**
CULTIVATOR BLADE MODULE FOR A SOIL CULTIVATION DEVICE
MODULE DE SOC D'ENGIN AGRICOLE POUR UN DISPOSITIF DE TRAITEMENT DU SOL

(30) Priorität: 22.12.2017 DE 202017107892 U
(43) Veröffentlichungstag der Anmeldung: 26.06.2019
(73) Patentinhaber: Hendlmeier, Konrad, 93107 Untersanding (DE)
(72) Erfinder: Hendlmeier, Konrad, 93107 Untersanding (DE)
(74) Vertreter: Glück Kritzenberger Patentanwälte PartGmbB

(56) Entgegenhaltungen:
- EP-A1- 0 199 406
- EP-A1- 2 848 108
- CN-U- 206 353 921
- DE-A1-102007 005 649
- DE-C- 646 311

## Beschreibung

### Technisches Gebiet

Die Erfindung bezieht sich auf ein Grubberscharmodul für eine Bodenbearbeitungsvorrichtung sowie auf eine Bodenbearbeitungsvorrichtung mit derartigen Grubberscharmodulen.

### Stand der Technik

Bodenbearbeitungsvorrichtungen, insbesondere zum Zerkleinern von Erdbrocken und/oder Einebenen des zerkleinerten Erdreiches sind hinlänglich aus dem Stand der Technik bekannt. Beispielsweise werden Grubberschare zur Bodenbearbeitung eingesetzt, wobei eine derartige Bodenbearbeitung mit Tiefscharen oder mit Flachscharen, nämlich über so genannte Schwer- oder Tiefgrubber mit Bodenbearbeitungstiefen bis auf Pflugtiefe oder über Leicht- oder Feingrubber für flache Bodenbearbeitung bis ungefähr zur Saattiefe erfolgen kann.

Derartige Bodenbearbeitungsvorrichtungen weisen eine Vielzahl von vorzugsweise in Reihen quer zur Arbeitsrichtung angeordnete Scharelemente oder Scharmodule auf. Aus der DE 10 2007 005 649 A1 ist der Aufbau und die Funktionsweise von Grubberscharen prinzipiell bekannt.

Ferner ist aus der EP 2 992 746 A1 eine Bodenbearbeitungsvorrichtung mit Grubberscharmodulen bekannt, bei der die Grubberschare über beispielsweise als Federstahlelemente ausgebildete Anschlusseinrichtungen am Trägerrahmen befestigt sind.

Die oberhalb erwähnten unterschiedlichen Bearbeitungstiefen können derzeit nur erreicht werden, indem verschiedene als Grubber ausgebildete Bodenbearbeitungsvorrichtungen verwendet werden. Daher besteht trotz der aus dem Stand der Technik bekannten Bodenbearbeitungvorrichtungen ein Bedarf, flexiblere Lösungen zur Verfügung zu stellen.

Aufgabe der vorliegenden Erfindung ist es daher ein Grubberscharmodul für Bodenbearbeitungsvorrichtungen zur Verfügung zu stellen, das die Nachteile des Standes der Technik überwindet und das insbesondere erlaubt, eine Bodenbearbeitungsvorrichtung auf einfachste Weise an unterschiedliche Bearbeitungstiefen anzupassen. Diese Aufgabe wird erfindungsgemäß durch das Grubberscharmodul gemäß unabhängigem Anspruch 1 gelöst. Ferner betrifft Anspruch 13 eine Bodenbearbeitungsvorrichtung mit derartigen Grubberscharmodulen. Weitere vorteilhafte Aspekte, Details und Ausgestaltungen der Erfindung ergeben sich aus den abhängigen Ansprüchen, der Beschreibung sowie den Zeichnungen.

Mit der vorliegenden Erfindung wird ein Grubberscharmodul zur Befestigung an einer Anschlusseinrichtung eines Trägerrahmens einer Bodenbearbeitungsvorrichtung zur Verfügung gestellt, das zumindest eine mit der Anschlusseinrichtung der Bodenbearbeitungsvorrichtung verbindbare Scharträgereinrichtung und zumindest eine lösbar mit der Scharträgereinrichtung verbundene erste Schareinheit umfasst. Die Schareinheit weist wenigstens eine Grubberschar und einen mit der Grubberschar verbundenen Scharstiel mit zumindest einem Verbindungsabschnitt auf. Der wesentliche Aspekt der vorliegenden Erfindung ist darin zu sehen, dass die Scharträgereinheit zur Aufnahme des Verbindungsabschnittes des Scharstiels ausgebildet ist, wobei der Verbindungsabschnitt im verbundenen Zustand in der Scharträgereinheit aufgenommen ist und wobei die Scharträgereinheit und der Verbindungsabschnitt dazu eingerichtet sind und derart zusammenwirken, dass die zumindest eine erste Schareinheit in wenigstens einer Haltestellung und in wenigstens einer Arbeitsstellung fixierbar ist. Die Schareinheit ist dabei mittels Verschwenken und/oder Umstecken von der zumindest einen Haltestellung in die zumindest eine Arbeitsstellung bewegbar.

Eine Arbeitsstellung oder Arbeitsposition gemäß dem vorliegenden Verständnis ist diejenige Position, in der die Schareinheit fixiert werden kann um in der vorgesehenen Bearbeitungstiefe den zu bearbeitenden Boden zu bearbeiten, und zwar in einer vorgegebenen Arbeitsrichtung der Bodenbearbeitungsvorrichtung. Eine Haltestellung oder Halteposition ist eine zusätzliche Position, in der die Schareinheit fixiert werden kann um nicht mit dem Boden in Berührung zu kommen. In Arbeitsstellung weist die Grubberschar ausgehend vom Trägerrahmen der Bodenbearbeitungsvorrichtung nach unten in Richtung des Bodens. In Haltestellung weist die Grubberschar beispielsweise vom Boden weg nach oben oder der Scharstiel ist zum Beispiel im Wesentlichen parallel zur Bodenoberfläche orientiert.

Mit der vorliegenden Erfindung ist es vorteilhaft möglich eine Schareinheit auf besonders einfache Weise von der Haltestellung in die Arbeitsstellung zu wechseln und umgekehrt. Damit kann beispielsweise eine einzige Bodenbearbeitungsvorrichtung mit verschiedenen Grubberscharmodulen und/oder Schareinheiten unterschiedlicher Eigenschaften, beispielsweise bezüglich der Bearbeitungstiefe oder der Bearbeitungsweise, ausgestattet werden. Je nach Einsatz und Bedarf können die entsprechend zu verwendenden Schareinheiten in Arbeitsstellung gebracht werden. Besonders vorteilhaft erfolgt das Wechseln der Stellungen oder Positionen durch einfaches Verschwenken oder Umstecken. Dadurch ist ein insbesondere erleichtertes Wechseln der Schareinheiten für verschiedene Arbeitstiefen möglich, und zwar ohne aufwändige Montagearbeiten und ohne Verwendung weiterer technischer Hilfsmittel.

Weiterhin vorteilhaft kann eine mit weiteren Werkzeugen zur Bodenbearbeitung ausgestattete Bodenbearbeitungsvorrichtung, beispielsweise ein Kombinationsgerät, so angepasst werden, dass je nach Bedarf optional eine Grubberbearbeitung zugeschaltet werden kann oder nicht.

Ebenso erweist sich als besonderer Vorteil, dass mit der vorliegenden Erfindung im Rahmen verschleißbedingter Wartungsarbeiten ein gegebenenfalls notwendiger Austausch von Grubberscharen erleichtert wird, da die Schareinheiten in Haltestellung so ausgerichtet werden können, dass die Grubberschare nicht an der tiefsten Stelle der Bodenbearbeitungsvorrichtung angeordnet sind. Das Lösen von Schrauben im Bereich der Grubberschare und das Wiederherstellen von Schraubverbindungen zwischen Grubberschar und Scharstiel ist dadurch vereinfacht und die Unfallgefahr ist reduziert.

Besondere Vorteile ergeben sich dadurch, dass ferner zumindest eine lösbar mit der Scharträgereinrichtung verbundene zweite Schareinheit mit wenigstens einer Grubberschar und einem Scharstiel vorgesehen ist, wobei die Scharträgereinheit ferner zur tragenden Aufnahme der zweiten Schareinheit ausgebildet und derart eingerichtet ist, dass auch die zweite Schareinheit mittels Verschwenken und/oder Umstecken von zumindest einer Haltestellung in zumindest eine Arbeitsstellung bewegt und in der jeweiligen Haltestellung und Arbeitsstellung fixiert werden kann. Ganz besonders bevorzugt sind die Grubberschar der ersten Schareinheit und die Grubberschar der zweiten Schareinheit dabei unterschiedlich ausgebildet. Beispielsweise ist die Grubberschar der ersten Schareinheit in Form einer Feingrubberschar und die Grubberschar der zweiten Schareinheit in Form einer Tiefgrubberschar ausgebildet, oder umgekehrt. In dieser Weise kann eine einzige Bodenbearbeitungsvorrichtung auf einfachste Art durch Verschwenken und/oder Umstecken der Schareinheiten von einem Leicht- oder Feingrubber auf einen Tief- oder Schwergrubber umgerüstet werden. Es versteht sich von selbst, dass die Grubberschare der beiden Schareinheiten alternativ auch gleich ausgebildet sein können.

Der Verbindungsabschnitt des Scharstiels ist als Abschnitt des Scharstiels, insbesondere als länglicher oder langgestreckter Abschnitt zu verstehen, der sich entlang einer Verbindungsachse erstreckt. Bevorzugt ist der Verbindungsabschnitt so ausgebildet, dass er abgewinkelt zum restlichen Bereich des Scharstiels angeordnet ist und die Verbindungsachse des Verbindungsabschnittes mit einer Hauptachse der Schareinheit einen Winkel einschließt. Insbesondere bevorzugt ist die Verbindungsachse im Wesentlichen senkrecht zu der Hauptachse der Schareinheit orientiert.

Gemäß einer besonders bevorzugten Ausführungsform der Erfindung ist der am Scharstiel vorgesehene Verbindungsabschnitt bolzenartig ausgebildet und die Scharträgereinheit weist einen hohlzylinderartigen Lagerabschnitt auf. Der Verbindungsabschnitt ist drehbeweglich, und zwar um eine Drehachse drehbar, in dem Lagerabschnitt aufgenommen, wobei die Drehachse achsgleich zu der Verbindungsachse verläuft, welche mit der Hauptachse der Schareinheit einen Winkel einschließt. In dieser bevorzugten Ausführungsform kann die Schareinheit durch Verschwenken bzw. durch Drehen um die Drehachse von der Haltestellung in die Arbeitsstellung und von dieser wieder zurück in die Haltestellung gebracht werden. Die Verbindung zwischen Verbindungsabschnitt und Lagerabschnitt kann als drehbewegliches Gleitlager verstanden werden, das an bestimmten Positionen oder Stellungen feststellbar oder fixierbar ist. Der Verbindungsabschnitt und der Lagerabschnitt weisen in dieser bevorzugten Ausführungsvariante jeweils eine kreisrunde Querschnittsform auf.

Gemäß einer bevorzugten alternativen Ausführungsform der Erfindung ist der am Scharstiel vorgesehene Verbindungsabschnitt steckerartig ausgebildet und die Scharträgereinheit weist wenigstens einen buchsenartigen Aufnahmeabschnitt auf, wobei der Verbindungsabschnitt und der Aufnahmeabschnitt zur Ausbildung einer Steckverbindung eingerichtet sind. In dieser bevorzugten Ausführungsvariante sind Querschnittsformen der Verbindungs- und Aufnahmeabschnitte denkbar, die von der kreisrunden Form abweichen und beispielsweise im Wesentlichen rechteckig, dreieckig oder polygonal sind. Das Wechseln der Schareinheit von der Haltestellung in die Arbeitsstellung erfolgt bei solchen Ausführungen durch Umstecken. Dazu wird der steckerartige Verbindungsabschnitt der Schareinheit aus dem Aufnahmeabschnitt herausgezogen und in einer entsprechend geänderten Relativposition wieder eingesteckt. Die Fixierung in der jeweiligen Arbeits- oder Haltestellung kann beispielsweise aufgrund der entsprechenden Querschnittsformen formschlüssig erfolgen.

Bevorzugt können die Scharstiele der ersten und zweiten Schareinheit an ihren der jeweiligen Grubberschar abgewandten Enden fest oder lösbar miteinander verbunden sein, und zwar derart, dass die jeweiligen Hauptachsen der Schareinheiten koaxial orientiert sind und in einer gemeinsamen Hauptachse zusammenfallen. Die miteinander verbundenen Scharstiele bilden vorzugsweise einen gemeinsamen Verbindungsabschnitt, wobei die Verbindungsachse des Verbindungsabschnittes mit der Hauptachse einen Winkel, besonders bevorzugt einen rechten Winkel einschließt. Der Verbindungsabschnitt und die beiden Scharstiele sind in derartigen Ausführungsvarianten im weitesten Sinne zu einem einstückigen T-förmigen Element zusammengeführt.

Alternativ kann der Verbindungsabschnitt auch durch einen sich in Richtung der Hauptachse der Schareinheit verlaufenden freiendseitigen Endabschnitt des Scharstiels gebildet sein. Die Verbindungsachse des Verbindungsabschnittes verläuft somit entlang der Hauptachse der Schareinheit, wobei der am Scharstiel vorgesehene Verbindungsabschnitt steckerartig ausgebildet ist und die Scharträgereinheit wenigstens einen ersten und zweiten buchsenartigen Aufnahmeabschnitt aufweist. Die Scharträgereinheit umfasst in dieser bevorzugten alternativen Ausführungsform zusätzlich einen Befestigungsabschnitt, der für die Verbindung mit der Anschlusseinrichtung des Trägerrahmens der Bodenbearbeitungsvorrichtung vorgesehen ist. Die buchsenartigen Aufnahmeabschnitte sind beispielsweise derart ausgerichtet und angeordnet, dass sie sich in Bezug auf den Befestigungsabschnitt gegenüberliegen. Der Verbindungsabschnitt und die Aufnahmeabschnitte sind zur Ausbildung einer jeweiligen Steckverbindung eingerichtet, wobei die Schareinheit durch ein Umstecken von dem ersten in den zweiten buchsenartigen Aufnahmeabschnitt aus der Haltestellung in die Arbeitsstellung bewegt werden kann. Beispielsweise können auch weitere zusätzliche buchsenartige Aufnahmeabschnitte vorgesehen und an dem Befestigungsabschnitt angeordnet sein. Insbesondere können zum Beispiel insgesamt drei oder insgesamt vier buchsenartige Aufnahmeabschnitte vorgesehen sein, die in einem Winkelabstand von jeweils 120° oder 90° voneinander beabstandet angeordnet sind. Dadurch können besonders vorteilhaft zusätzliche Stellungen geschaffen werden, die als weitere Haltestellungen der Schareinheiten dienen können.

Gemäß einer bevorzugten Ausführungsform der Erfindung sind zum Fixieren der Schareinheit in der jeweiligen Haltestellung und Arbeitsstellung zusätzlich Steckbolzen vorgesehen, wobei die Scharträgereinheit und der Verbindungsabschnitt mit entsprechenden jeweiligen Durchführungsöffnungen zum Durchführen der Steckbolzen ausgestattet sind. Besonders vorteilhaft kann jeder Steckbolzen zusätzlich mittels eines Splints gesichert werden.

Ebenso bevorzugt sind die Scharträgereinheit und der Verbindungsabschnitt für ein formschlüssiges Fixieren der Schareinheit in der jeweiligen Haltestellung und Arbeitsstellung eingerichtet.

Vorteilhaft ist die Scharträgereinheit zum Verschrauben mit der Anschlusseinrichtung des Trägerrahmens der Bodenbearbeitungsvorrichtung ausgebildet.

Die Erfindung betrifft auch eine Bodenbearbeitungsvorrichtung mit Grubberscharmodul enwie oberhalb beschrieben. Die Bodenbearbeitungsvorrichtung umfasst zumindest einen Trägerrahmen, an dem wenigstens an einer quer zu einer Längsachse der Bodenbearbeitungsvorrichtung verlaufenden Reihe Anschlusseinrichtungen vorgesehen sind, wobei die Grubberscharmodule mit den Anschlusseinrichtungen verbunden sind.

Weiterbildungen, Vorteile und Anwendungsmöglichkeiten der Erfindung ergeben sich auch aus der nachfolgenden Beschreibung von Ausführungsbeispielen und aus den Figuren.

### Kurze Beschreibung der Zeichnungen

Die Erfindung soll nachfolgend anhand von Ausführungsbeispielen im Zusammenhang mit den Zeichnungen näher erläutert werden. Es zeigen
Fig. 1 grob schematisch dargestellt eine Ausführungsform eines Grubberscharmoduls gemäß der vorliegenden Erfindung in einer seitlichen Ansicht;
Fig. 2 grob schematisch dargestellt eine alternative Ausführungsform eines Grubberscharmoduls gemäß der vorliegenden Erfindung in einer seitlichen Ansicht;
Fig. 3 grob schematisch dargestellt eine weitere alternative Ausführungsform eines Grubberscharmoduls gemäß der vorliegenden Erfindung in einer seitlichen Ansicht;
Fig. 4 grob schematisch dargestellt eine noch weitere alternative Ausführungsform eines Grubberscharmoduls gemäß der vorliegenden Erfindung in einer seitlichen Ansicht und
Fig. 5 grob schematisch dargestellt eine Bodenbearbeitungsvorrichtung mit verbundenen Grubberscharmodulen.

### Wege zur Ausführung der Erfindung

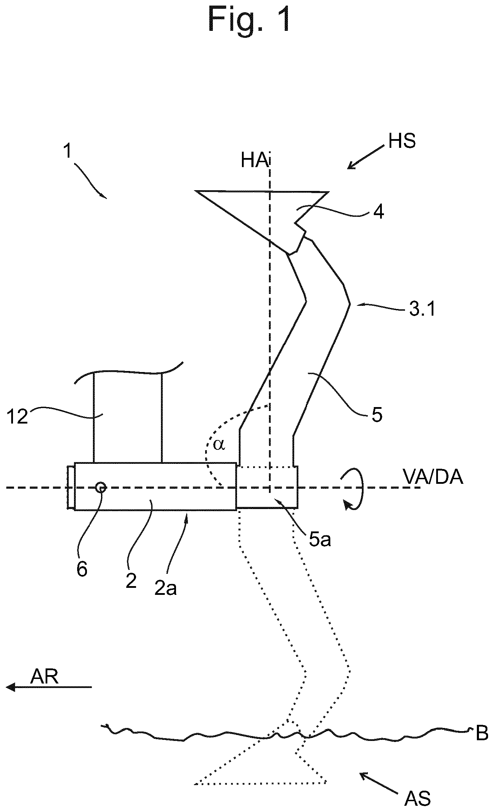

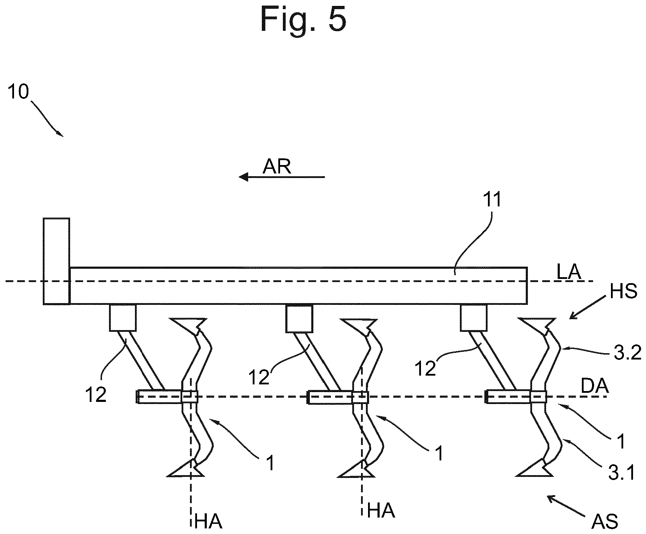

Figur 1 zeigt eine Ausführungsform eines Grubberscharmoduls 1 gemäß der vorliegenden Erfindung in einer seitlichen Ansicht. Das Grubberscharmodul 1 ist zur Befestigung an einer Anschlusseinrichtung 12 eines Trägerrahmens 11 (in Figur 1 nicht sichtbar, siehe Figur 5) einer Bodenbearbeitungsvorrichtung 10 (siehe Figur 5) ausgebildet und ist im dargestellten Beispiel mit einer solchen Anschlusseinrichtung 12 verbunden, insbesondere verschraubt.

Das Grubberscharmodul 1 weist eine im dargestellten Beispiel mit der Anschlusseinrichtung 12 verbundene Scharträgereinrichtung 2 und zumindest eine lösbar mit der Scharträgereinrichtung 2 verbundene erste Schareinheit 3.1 auf. Die Schareinheit 3.1 umfasst einen Scharstiel 5 und eine daran anschließende Grubberschar 4, die mit dem Scharstiel 5 verbunden, vorzugsweise verschraubt ist. Die Grubberschar 4 ist im vorliegenden Beispiel in Form einer Tiefgrubberschar ausgebildet. Der Scharstiel 5 weist zumindest einen Verbindungsabschnitt 5a auf, der an einem der Grubberschar 4 abgewandten Ende des Scharstiels 5 angeordnet ist und für die lösbare Verbindung mit der Scharträgereinrichtung 2 zur Verfügung steht. Der im Beispiel der Figur 1 bolzenartig ausgebildete Verbindungsabschnitt 5a ist in Bezug auf den übrigen Bereich des Scharstiels 5 abgewinkelt zu diesem ausgebildet und erstreckt sich seiner Länge nach entlang einer Verbindungsachse VA, welche mit einer Hauptachse HA der Schareinheit 3.1 einen im Wesentlichen rechten Winkel α einschließt.

Die Scharträgereinheit 2 ist zur Aufnahme des Verbindungsabschnittes 5a des Scharstiels 5 ausgebildet und weist einen hohlzylinderartigen Lagerabschnitt 2a auf, in dem der Verbindungsabschnitt 5a zur tragenden Halterung der Schareinheit 3.1 drehbeweglich, und zwar um eine Drehachse DA drehbar aufgenommen bzw. gelagert ist. Die Drehachse DA verläuft achsgleich zu der Verbindungsachse VA.

Die Scharträgereinheit 2 und der Verbindungsabschnitt 5a sind derart eingerichtet und wirken derart zusammen, dass die Schareinheit 3.1 in wenigstens einer Haltestellung HS und in wenigstens einer Arbeitsstellung AS (in der Figur 1 in punktierten Linien dargestellt) fixierbar ist, wobei die Schareinheit 3.1 mittels Verschwenken um die Drehachse DA von der Haltestellung HS in die Arbeitsstellung AS bewegt werden kann, und zwar durch eine Drehung von rund 180° um die Drehachse DA. In der Arbeitsstellung AS kann die Grubberschar 4 mit einer gewünschten, vorgegebenen Bearbeitungstiefe in den Boden B zu dessen Bearbeitung in einer entsprechenden Arbeitsrichtung AR eingreifen.

Zur Fixierung der Schareinheit 3.1 in den beiden Stellungen, nämlich in der Haltestellung HS und in der Arbeitsstellung AS ist ein (nicht in den Figuren dargestellter) Steckbolzen vorgesehen, der in den jeweiligen Stellungen durch entsprechende, vorgesehene Durchgangsöffnungen 6 im Verbindungsabschnitt 5a des Scharstiels 5 und im Lagerabschnitt 2a der Scharträgereinheit 2 geführt ist und beispielsweise über einen Splint gesichert ist. Gegebenenfalls kann eine weitere Fixierung in einer Zwischenstellung vorgesehen sein, beispielsweise in einer Stellung in der ausgehend von der dargestellten Positionierung eine Drehung von 90° oder 120° um die Drehachse DA erfolgt.

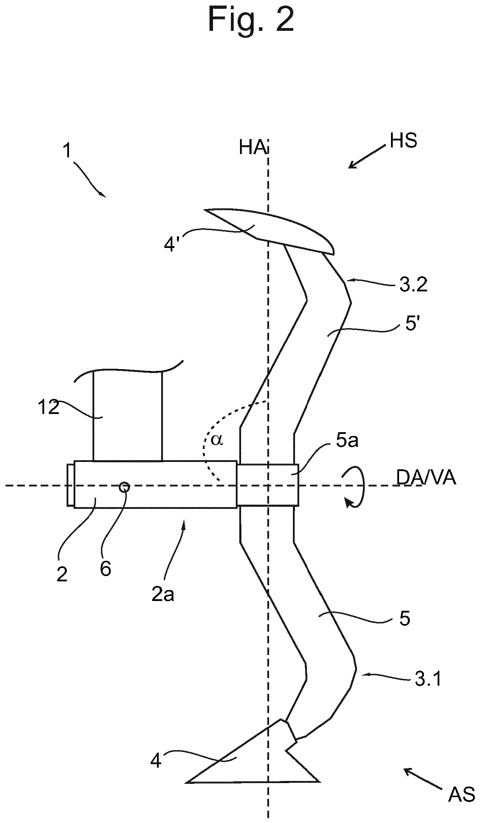

Figur 2 zeigt eine weitere Ausführungsform eines Grubberscharmoduls 1 gemäß der vorliegenden Erfindung in einer seitlichen Ansicht, welche im Unterschied zur Ausführungsvariante der Figur 1 eine erste und eine zweite Schareinheit 3.1, 3.2 aufweist, von denen jede einen Scharstiel 5, 5' und eine Grubberschar 4, 4' umfasst. Die Grubberschare 4, 4' der beiden Schareinheiten 3.1, 3.2 sind unterschiedlich ausgeführt, wobei die Grubberschar 4 in Form einer Tiefgrubberschar und die Grubberschar 4' in Form einer Feingrubberschar ausgebildet ist.

Die beiden Schareinheiten 3.1, 3.2 sind im Wesentlichen spiegelsymmetrisch zueinander angeordnet und derart über ihre Scharstiele 5, 5', und zwar an deren den Grubberscharen 4, 4' abgewandten Enden, miteinander verbunden, insbesondere verschweißt, dass die beiden Hauptachsen HA der Schareinheiten 3.1, 3.2 in einer gemeinsamen Hauptachse HA zusammenfallen. Die Verbindung der Schareinheiten 3.1, 3.2 ist dergestalt, dass die Scharstiele 5, 5' einen gemeinsamen Verbindungsabschnitt 5a ausbilden, der sich entlang seiner Verbindungsachse VA erstreckt, welche analog zur Ausführungsform gemäß Figur 1 senkrecht zur Hauptachse HA und koaxial mit der Drehachse DA verläuft.

Durch Verschwenken der miteinander verbundenen Schareinheiten 3.1, 3.2 kann jede der Schareinheiten 3.1, 3.2 von der Haltestellung HS in die Arbeitsstellung AS bewegt werden und umgekehrt. Durch die im Wesentlichen spiegelsymmetrische Anordnung der Schareinheiten 3.1, 3.2 tauschen diese bei einer Drehung von rund 180° um die Drehachse DA quasi ihre Stellungen. Die Fixierung in den entsprechenden Stellungen erfolgt analog zu dem Beispiel der Figur 1 mittels Steckbolzen und Splintsicherung. Gegebenenfalls kann eine weitere Fixierung in einer Zwischenstellung vorgesehen sein, beispielsweise in einer Stellung in der ausgehend von der dargestellten Positionierung eine Drehung von 90° um die Drehachse DA erfolgt.

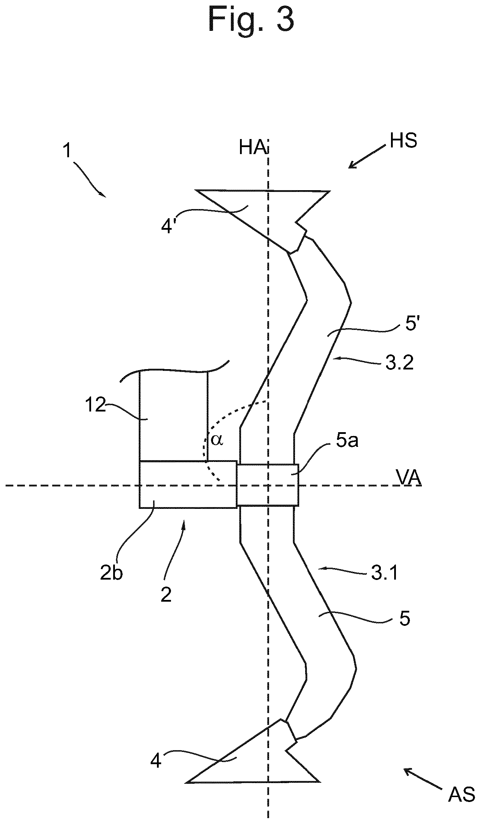

Figur 3 zeigt eine weitere Ausführungsform eines Grubberscharmoduls 1 gemäß der vorliegenden Erfindung in einer seitlichen Ansicht, bei der im Unterschied zur Ausführungsvariante der Figur 2 eine Steckverbindung zwischen dem Verbindungsabschnitt 5a der Schareinheiten 3.1, 3.2 und der Scharträgereinheit 2 ausgebildet ist.

Die Scharträgereinheit 2 weist dazu einen buchsenartigen Aufnahmeabschnitt 2b auf und der gemeinsame Verbindungsabschnitt 5a der miteinander verbundenen Schareinheiten 3.1, 3.2 ist steckerartig ausgebildet. Jede der Schareinheiten 3.1, 3.2 kann durch Umstecken von der Haltestellung HS in die Arbeitsstellung AS bewegt werden. Dazu wird der Verbindungsabschnitt 5a beispielsweise in Richtung der Verbindungsachse VA aus dem Aufnahmeabschnitt 2b herausgezogen und in entsprechend anderer, beispielsweise relativ verdrehter, Orientierung wieder hineingesteckt.

Die Fixierung in den jeweiligen Stellungen kann beispielsweise formschlüssig erfolgen, indem z.B. die Querschnitte des Verbindungsabschnittes 5a und des Aufnahmeabschnittes 2b von einer runden Form abweichen und in den vorgegebenen Stellungen zusammenwirkend ineinander gesteckt werden können.

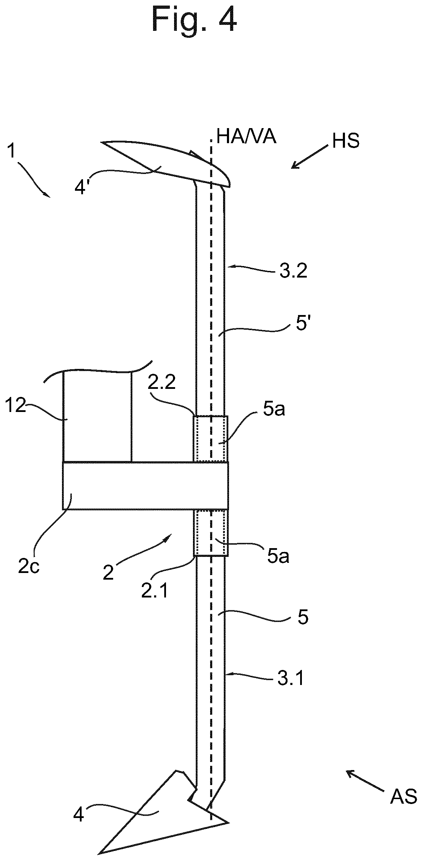

Eine alternative Ausführungsform eines Grubberscharmoduls 1 gemäß der vorliegenden Erfindung zeigt Figur 4, bei der ebenfalls zwei Schareinheiten 3.1, 3.2 vorgesehen sind, die jedoch nicht miteinander verbunden sind. Die Verbindungsabschnitte 5a der Scharstiele 5, 5' sind steckerartig ausgebildet und durch freiendseitige Endabschnitte der Scharstiele 5, 5' gebildet, die sich jeweils in Richtung der Hauptachse HA erstrecken, so dass eine jeweilige Verbindungsachse VA der Verbindungsabschnitte 5a mit der Hauptachse HA der jeweiligen Schareinheit 3.1, 3.2 zusammenfällt.

Die Scharträgereinheit 2 umfasst in der dargestellten Ausführungsvariante einen ersten und zweiten buchsenartigen Aufnahmeabschnitt 2.1, 2.2 sowie einen Befestigungsabschnitt 2c, der für die Verbindung mit der Anschlusseinrichtung 12 des Trägerrahmens 11 (siehe Figur 5) ausgebildet ist. Der erste und zweite buchsenartige Aufnahmeabschnitt 2.1, 2.2 sind an dem Befestigungsabschnitt 2c festgelegt und zwar derart, dass sich die buchsenartigen Aufnahmeabschnitte 2.1, 2.2 in Bezug auf den Befestigungsabschnitt 2c gegenüberliegen und somit in einem Winkelabstand von rund 180° zueinander angeordnet sind.

Der Verbindungsabschnitt 5a und die buchsenartigen Aufnahmeabschnitte 2.1, 2.2 sind zur Ausbildung einer jeweiligen Steckverbindung eingerichtet. Die Schareinheiten 3.1, 3.2 können durch ein Umstecken von dem ersten in den zweiten buchsenartigen Aufnahmeabschnitt 2.1, 2.2 aus der Haltestellung HS in die Arbeitsstellung AS bewegt werden und umgekehrt. Im dargestellten Beispiel können die entsprechenden Schareinheiten 3.1, 3.2 ihrer Steckplätze in den jeweiligen buchsenartigen Aufnahmeabschnitten 2.1, 2.2 tauschen.

Beispielsweise können auch weitere zusätzliche buchsenartige Aufnahmeabschnitte vorgesehen und an dem Befestigungsabschnitt 2c angeordnet sein. Insbesondere können zum Beispiel insgesamt drei oder insgesamt vier buchsenartige Aufnahmeabschnitte vorgesehen sein, die in einem Winkelabstand von jeweils 120° oder 90° voneinander beabstandet angeordnet sein können. Dadurch können besonders vorteilhaft zusätzliche Stellungen geschaffen werden, die als weitere Haltestellungen der Schareinheiten 3.1, 3.2 dienen können.

Figur 5 zeigt in einer grob schematischen Seitenansicht eine Bodenbearbeitungsvorrichtung 10 mit befestigten Grubberscharmodulen 1 gemäß einer bevorzugten Ausführungsform der Erfindung.

Die Bodenbearbeitungsvorrichtung 10 umfasst einen Trägerrahmen 11 an dem Anschlusseinrichtungen 12 für die Befestigung der Grubberscharmodule 1 angeordnet sind. Die Anschlusseinrichtungen 12 können gebogenene Federstahlelemente zur federnden und lösbaren Befestigung der Grubberscharmodule 1 umfassen, wobei jedes Grubberscharmodul 1 über die jeweilige Scharträgereinrichtung 2 mit jeweils einer Anschlusseinrichtung 12 vorzugsweise mittels einer Schraubverbindung verbunden ist.

Die Bodenbearbeitungsvorrichtung 10 wird von einer Zugmaschine, insbesondere einem Schlepper in einer Arbeitsrichtung AR gezogen, derart, dass die Bodenbearbeitung in vorgegebener Bearbeitungstiefe ebenfalls in Arbeitsrichtung AR erfolgt. Die Arbeitsrichtung AR entspricht im Wesentlichen der Richtung einer Längsachse LA der Bodenbearbeitungsvorrichtung 10.

Die in Figur 5 beispielhaft dargestellten, am Trägerrahmen 11 befestigten Grubberscharmodule 1 sind entsprechend der Ausführungsvariante gemäß Figur 2 ausgeführt, mit dem einzigen Unterschied, dass beide Grubberschare 4, 4' der beiden Schareinheiten 3.1, 3.2 gleich ausgestaltet sind. Die Schareinheiten 3.1, 3.2 können durch Verschwenken bzw. durch ein Drehen um die Drehachse DA von der Haltestellung HS in die Arbeitsstellung AS gebracht werden und umgekehrt, wobei die Drehachse DA und die Längsachse LA der Bodenbearbeitungsvorrichtung 10 im Wesentlichen parallel zueinander orientiert sind und die jeweiligen Hauptachsen HA der Schareinheiten 3.1, 3.2 näherungsweise senkrecht zu der Drehachse DA und zu der Längsachse LA verlaufen.

Bei der Bodenbearbeitungsvorrichtung 10 kann auf besonders einfache Weise ein Wechseln der Schareinheiten 3.1, 3.2 in die entsprechende Arbeits- bzw. Haltestellung AS, HA erfolgen. Ebenso erweist sich als besonderer Vorteil, dass bei der Bodenbearbeitungsvorrichtung 10 im Rahmen verschleißbedingter Wartungsarbeiten ein gegebenenfalls notwendiger Austausch der Grubberschare 4, 4' erleichtert wird, da die Schareinheiten 3.1, 3.2 in Haltestellung HS so ausgerichtet sind, dass die Grubberschare 4, 4' nach oben weisen und leichter zugänglich sind. Das Lösen von Schrauben im Bereich der Grubberschare 4, 4' und das Wiederherstellen von Schraubverbindungen zwischen Grubberschar 4, 4' und Scharstiel 5, 5' ist dadurch vereinfacht und die Unfallgefahr ist reduziert.

### Bezugszeichenliste

1 Grubberscharmodul
2 Scharträgereinrichtung
2.1 erster buchsenartiger Aufnahmeabschnitt
2.2 zweiter buchsenartiger Aufnahmeabschnitt
2a hohlzylinderartiger Lagerabschnitt
2b Aufnahmeabschnitt
2c Befestigungsabschnitt
3.1 erste Schareinheit
3.2 zweite Schareinheit
4, 4' Grubberschar
5, 5' Scharstiel
5a Verbindungsabschnitt
6 Durchgangsbohrung
10 Bodenbearbeitungsvorrichtung
11 Trägerrahmen
12 Anschlusseinrichtung
α Winkel
AS Arbeitsstellung
AR Arbeitsrichtung
DA Drehachse
HA Hauptachse
HS Haltestellung
LA Längsachse
VA Verbindungsachse

## Patentansprüche

1. Grubberscharmodul (1) zur Befestigung an einer Anschlusseinrichtung (12) eines Trägerrahmens (11) einer Bodenbearbeitungsvorrichtung (10), aufweisend zumindest eine mit der Anschlusseinrichtung (12) der Bodenbearbeitungsvorrichtung (10) verbindbare Scharträgereinrichtung (2) und zumindest eine lösbar mit der Scharträgereinrichtung (2) verbundene erste Schareinheit (3.1), wobei die Schareinheit (3.1) wenigstens eine Grubberschar (4) und einen Scharstiel (5) mit zumindest einem Verbindungsabschnitt (5a) umfasst, **dadurch gekennzeichnet, dass** die Scharträgereinheit (2) zur Aufnahme des Verbindungsabschnittes (5a) des Scharstiels (5) ausgebildet ist, wobei der Verbindungsabschnitt (5a) im verbundenen Zustand in der Scharträgereinheit (2) aufgenommen ist, wobei die Scharträgereinheit (2) und der Verbindungsabschnitt (5a) dazu eingerichtet sind und derart zusammenwirken, dass die zumindest eine erste Schareinheit (3.1) in wenigstens einer Haltestellung (HS) und in wenigstens einer Arbeitsstellung (AS) fixierbar ist, wobei die Schareinheit (3.1) mittels Verschwenken und/oder Umstecken von der zumindest einen Haltestellung (HS) in die zumindest eine Arbeitsstellung (AS) bewegbar ist.

2. Grubberscharmodul (1) nach Anspruch 1, **dadurch gekennzeichnet, dass** ferner zumindest eine lösbar mit der Scharträgereinrichtung (2) verbundene zweite Schareinheit (3.2) mit wenigstens einer Grubberschar (4') und einem Scharstiel (5') vorgesehen ist, wobei die Scharträgereinheit (2) ferner zur tragenden Aufnahme der zweiten Schareinheit (3.2) ausgebildet und derart eingerichtet ist, dass auch die zweite Schareinheit (3.2) mittels Verschwenken und/oder Umstecken von zumindest einer Haltestellung (HS) in zumindest eine Arbeitsstellung (AS) bewegt und in der jeweiligen Haltestellung (HS) und Arbeitsstellung (AS) fixierbar ist.

3. Grubberscharmodul (1) nach Anspruch 2, **dadurch gekennzeichnet, dass** die Grubberschar (4) der ersten Schareinheit (3.1) und die Grubberschar (4') der zweiten Schareinheit (3.2) unterschiedlich ausgebildet sind.

4. Grubberscharmodul (1) nach einem der Ansprüche 1 bis 3, **dadurch gekennzeichnet, dass** eine Verbindungsachse (VA) des Verbindungsabschnittes (5a) mit einer Hauptachse (HA) der Schareinheit (3.1, 3.2) einen Winkel (α) einschließt.

5. Grubberscharmodul (1) nach Anspruch 4, **dadurch gekennzeichnet, dass** die Verbindungsachse (VA) im Wesentlichen senkrecht zu der Hauptachse (HA) der Schareinheit (3.1, 3.2) orientiert ist.

6. Grubberscharmodul (1) nach Anspruch 4 oder 5, **dadurch gekennzeichnet, dass** der am Scharstiel (5, 5') vorgesehene Verbindungsabschnitt (5a) bolzenartig ausgebildet ist und die Scharträgereinheit (2) einen hohlzylinderartigen Lagerabschnitt (2a) aufweist, wobei der Verbindungsabschnitt (5a) drehbeweglich, und zwar um eine Drehachse (DA) drehbar, in dem Lagerabschnitt (2a) aufgenommen ist und wobei die Drehachse (DA) achsgleich zu der Verbindungsachse (VA) verläuft.

7. Grubberscharmodul (1) nach Anspruch 4 oder 5, **dadurch gekennzeichnet, dass** der am Scharstiel (5, 5') vorgesehene Verbindungsabschnitt (5a) steckerartig ausgebildet ist und die Scharträgereinheit (2) wenigstens einen buchsenartigen Aufnahmeabschnitt (2b) aufweist, wobei der Verbindungsabschnitt (5a) und der Aufnahmeabschnitt (2b) zur Ausbildung einer Steckverbindung eingerichtet sind.

8. Grubberscharmodul (1) nach einem der Ansprüche 2 bis 7, **dadurch gekennzeichnet, dass** die Scharstiele (5, 5') der ersten und zweiten Schareinheit (3.1, 3.2) an ihren der jeweiligen Grubberschar (4, 4') abgewandten Enden fest oder lösbar miteinander verbunden, und zwar derart, dass die jeweiligen Hauptachsen (HA) der Schareinheiten (3.1, 3.2) koaxial orientiert sind und die miteinander verbundenen Scharstiele (5, 5') einen gemeinsamen Verbindungsabschnitt (5a) bilden, wobei die Verbindungsachse (VA) des Verbindungsabschnittes (5a) mit der Hauptachse (HA) einen Winkel (α) einschließt.

9. Grubberscharmodul (1) nach einem der Ansprüche 1 bis 3, **dadurch gekennzeichnet, dass** die Verbindungsachse (VA) des Verbindungsabschnittes (5a) entlang der Hauptachse (HA) der Schareinheit (3.1, 3.2) verläuft, wobei der am Scharstiel (5, 5') vorgesehene Verbindungsabschnitt (5a) steckerartig ausgebildet ist und die Scharträgereinheit (2) wenigstens einen ersten und zweiten buchsenartigen Aufnahmeabschnitt (2.1, 2.2) aufweist, wobei der Verbindungsabschnitt (5a) und die Aufnahmeabschnitte (2.1, 2.2) zur Ausbildung einer jeweiligen Steckverbindung eingerichtet sind und wobei die Schareinheit (3.1, 3.2) durch ein Umstecken von dem ersten in den zweiten buchsenartigen Aufnahmeabschnitt (2.1, 2.2) aus der Haltestellung (HS) in die Arbeitsstellung (AS) bewegbar ist.

10. Grubberscharmodul (1) nach einem der vorhergehenden Ansprüche, **dadurch gekennzeichnet, dass** zum Fixieren der Schareinheit (3.1, 3.2) in der jeweiligen Haltestellung (HS) und Arbeitsstellung (AS) zusätzlich Steckbolzen vorgesehen sind, wobei die Scharträgereinheit (2) und der Verbindungsabschnitt (5a) mit entsprechenden jeweiligen Durchführungsöffnungen zum Durchführen der Steckbolzen ausgestattet sind.

11. Grubberscharmodul (1) nach einem der vorhergehenden Ansprüche, **dadurch gekennzeichnet, dass** die Scharträgereinheit (2) und der Verbindungsabschnitt (5a) für ein formschlüssiges Fixieren der Schareinheit (3.1, 3.2) in der jeweiligen Haltestellung (HS) und Arbeitsstellung (AS) eingerichtet sind.

12. Grubberscharmodul (1) nach einem der vorhergehenden Ansprüche, **dadurch gekennzeichnet, dass** die Scharträgereinheit (2) zum Verschrauben mit der Anschlusseinrichtung des Trägerrahmens der Bodenbearbeitungsvorrichtung ausgebildet ist.

13. Bodenbearbeitungsvorrichtung (10) mit wenigstens einem Grubberscharmodul (1) gemäß den Ansprüchen 1 bis 12, umfassend zumindest einen Trägerrahmen (11), an wenigstens einer quer zu einer Längsachse (LA) der Bodenbearbeitungsvorrichtung (10) verlaufenden Reihe Anschlusseinrichtungen (12) vorgesehen sind, wobei das wenigstens eine Grubberscharmodul (1) mit einer der Anschlusseinrichtungen (12) verbunden ist.

## Claims

1. Cultivator blade module (1) for attachment to a connection device (12) of a support frame (11) of a soil cultivation device (10), having at least a blade support means (2) connectable to the connection device (12) of the soil cultivation device (10) and at least one first blade unit (3.1) detachably connected to the blade support means (2), wherein the blade unit (3.1) comprises at least one cultivator blade (4) and a blade shaft (5) with at least one connecting section (5a), **characterized in that** the blade support means (2) is designed for accommodating the connection section (5a) of the blade shaft (5), wherein the connecting section (5a) is accommodated in the blade support means (2) in the connected state, wherein the blade support means (2) and the connecting section (5a) are designed for and interact in such a way that the at least one first blade unit (3.1) can be fixed in at least one holding position (HS) and in at least one working position (AS), wherein the blade unit (3.1) can be moved from the at least one holding position (HS) into the at least one working position (AS) by means of pivoting and/or replugging.

2. Cultivator blade module (1) according to claim 1, **characterized in that** additionally at least one second blade unit (3.2) is provided, which is detachably connected to the blade support means (2) and has at least one cultivator blade (4') and a blade shaft (5'), wherein the blade support means (2) is additionally designed for the supporting accommodation of the second blade unit (3.2) and is designed in such a way that the second blade unit (3.2) is also moved from at least one holding position (HS) into at least one working position (AS) by means of pivoting and/or replugging and can be fixed in the respective holding position (HS) and working position (AS).

3. Cultivator blade module (1) according to claim 2, **characterized in that** cultivator blade (4) of the first blade unit (3.1) and the cultivator blade (4') of the second blade unit (3.2) are designed differently.

4. Cultivator blade module (1) according to one of claims 1 to 3, **characterized in that** a connection axis (VA) of the connecting section (5a) defines an angle (α) with a main axis (HA) of the blade unit (3.1, 3.2).

5. Cultivator blade module (1) according to claim 4, **characterized in that** the connection axis (VA) is oriented substantially perpendicular to the main axis (HA) of the blade unit (3.1, 3.2).

6. Cultivator blade module (1) according to claim 4 or 5, **characterized in that** the connecting section (5a) provided on the blade shaft (5, 5') is designed like a bolt and the blade support means (2) has a hollow cylindrical bearing section (2a), wherein the connecting section (5a) is accommodated in the bearing section (2a) in a rotationally movable manner, namely rotationally movable about an axis of rotation (DA), and wherein the axis of rotation (DA) extends coaxially with the connection axis (VA).

7. Cultivator blade module (1) according to claim 4 or 5, **characterized in that** the connecting section (5a) provided on the blade shaft (5, 5') is designed like a plug and the blade support unit (2) has at least one socket-like accommodation section (2b), wherein the connecting section (5a) and the accommodation section (2b) are designed to form a plug connection.

8. Cultivator blade module (1) according to one of claims 2 to 7, **characterized in that** the blade shafts (5, 5') of the first and second blade unit (3.1, 3.2) are fixedly or detachably connected to each other at their ends facing away from the respective cultivator blade (4, 4'), namely in such a way that the respective main axes (HA) of the blade units (3.1, 3.2) are coaxially oriented, and the blade shafts (5, 5') connected to each other form a common connecting section (5a), wherein the connection axis (VA) of the connecting section (5a) defines an angle (α) with the main axis (HA).

9. Cultivator blade module (1) according to one of claims 1 to 3, **characterized in that** the connection axis (VA) of the connecting section (5a) extends along the main axis (HA) of the blade unit (3.1, 3.2), wherein the connecting section (5a) provided on the blade shaft (5, 5') is designed like a plug and the blade support unit (2) has at least one first and one second socket-like accommodation section (2.1, 2.2), wherein the connecting section (5a) and the accommodation sections (2.1, 2.2) are designed to form a respective plug connection, and wherein the blade unit (3.1, 3.2) can be moved from the holding position (HS) into the working position (AS) by replugging from the first socket-like accommodation section into the second accommodation section (2.1, 2.2).

10. Cultivator blade module (1) according to one of the preceding claims, **characterized in that** additional locking pins are provided for fixing the blade unit (3.1, 3.2) in the respective holding position (HS) and working position (AS), wherein the blade support means (2) and the connecting section (5a) are equipped with corresponding respective through openings for passing through the locking pins.

11. Cultivator blade module (1) according to one of the preceding claims, **characterized in that** the blade support means (2) and the connecting section (5a) are designed for a positive locking fixing of the blade unit (3.1, 3.2) in the respective holding position (HS) and working position (AS).

12. Cultivator blade module (1) according to one of the preceding claims, **characterized in that** the blade support means (2) is designed for screwing to the connection device of the support frame of the soil cultivation device.

13. Soil cultivation device (10) having at least one cultivator blade module (1) according to claims 1 to 12, comprising at least one support frame (11), on which connection devices (12) are provided in at least one row extending transverse to a longitudinal axis (LA) of the soil cultivation device (10), wherein the at least one cultivator blade module (1) is connected to one of the connection devices (12).

## Revendications

1. Module de soc cultivateur (1), à fixer sur un dispositif de raccordement (12) d'un cadre porteur (11) d'un appareil de travail du sol (10), comportant au moins un dispositif porteur de soc (2) apte à être assemblé avec le dispositif de raccordement (12) de l'appareil de travail du sol (10) et au moins un premier ensemble de soc (3.1) assemblé de manière amovible avec le dispositif porteur de soc (2), l'ensemble de soc (3.1) comprenant au moins un soc cultivateur (4) et un manche de soc (5) pourvu d'au moins une partie d'assemblage (5a), **caractérisé en ce que** le dispositif porteur de soc (2) est conçu pour réceptionner la partie d'assemblage (5a) du manche de soc (5), en position assemblée, la partie d'assemblage (5a) étant réceptionnée dans le dispositif porteur de soc (2), le dispositif porteur de soc (2) et la partie d'assemblage (5a) étant aménagés pour et coopérant de telle sorte que l'au moins un premier ensemble de soc (3.1) soit apte à être fixé dans au moins une position d'arrêt (HS) et dans au moins une position de travail (AS), l'ensemble de soc (3.1) étant déplaçable par pivotement et/ou permutation de l'au moins une position d'arrêt (HS) dans l'au moins une position de travail (AS).

2. Module de soc cultivateur (1) selon la revendication 1, **caractérisé en ce qu'**il est prévu par ailleurs au moins un deuxième ensemble de soc (3.2), pourvu d'au moins un soc cultivateur (4') et d'un manche de soc (5'), assemblé de manière amovible avec le dispositif porteur de soc (2), le dispositif porteur de soc (2) étant prévu par ailleurs pour la réception porteuse du deuxième ensemble de soc (3.2) et étant aménagé de telle sorte qu'également le deuxième ensemble de soc (3.2) soit déplacé par pivotement et/ou par permutation d'au moins une position d'arrêt (HS) dans au moins position de travail (AS) et soit apte à être fixé dans la position d'arrêt (HS) et position de travail respective.

3. Module de soc cultivateur (1) selon la revendication 2, **caractérisé en ce que** le soc cultivateur (4) du premier ensemble de soc (3.1) et le soc cultivateur (4') du deuxième ensemble de soc (3.2) sont conçus différemment.

4. Module de soc cultivateur (1) selon l'une quelconque des revendications 1 à 3, **caractérisé en ce qu'**un axe d'assemblage (VA) de la partie d'assemblage (5a) inclut avec un axe principal (HA) de l'ensemble de soc (3.1, 3.2) un angle (α).

5. Module de soc cultivateur (1) selon la revendication 4, **caractérisé en ce que** l'axe d'assemblage (VA) est orienté sensiblement à la perpendiculaire de l'axe principal (HA) de l'ensemble de soc (3.1, 3.2).

6. Module de soc cultivateur (1) selon la revendication 4 ou 5, **caractérisé en ce que** la partie d'assemblage (5a) prévue sur le manche de soc (5, 5') est conçue sous la forme d'un goujon et le dispositif porteur de soc (2) comporte une partie de support (2a) en forme de cylindre creux, la partie d'assemblage (5a) étant logée de manière mobile en rotation, à savoir autour d'un axe de rotation (DA) dans la partie de support (2a) et l'axe de rotation (DA) s'écoulant sur le même axe que l'axe d'assemblage (VA).

7. Module de soc cultivateur (1) selon la revendication 4 ou 5, **caractérisé en ce que** la partie d'assemblage (5a) prévue sur le manche de soc (5, 5') est conçue en forme de connecteur et le dispositif porteur de soc (2) comporte une partie de logement (2b) en forme de douille, la partie d'assemblage (5a) et la partie de logement (2b) étant aménagées pour créer un assemblage par enfichage.

8. Module de soc cultivateur (1) selon l'une quelconque des revendications 2 à 7, **caractérisé en ce que** sur leurs extrémités opposées au soc cultivateur (4, 4') respectif, les manches de soc (5, 5') du premier et du deuxième ensembles de soc (3.1, 3.2) sont assemblés l'un à l'autre de manière fixe ou amovible, à savoir de telle sorte que les axes principaux (HA) respectifs des ensembles de soc (3.1, 3.2) soient orientés de manière coaxiale et que les manches de soc (5, 5') assemblés l'un à l'autre forment une partie d'assemblage (5a) commune, l'axe d'assemblage (VA) de la partie d'assemblage (5a) incluant avec l'axe principal (HA) un angle (α).

9. Module de soc cultivateur (1) selon l'une quelconque des revendications 1 à 3, **caractérisé en ce que** l'axe d'assemblage (VA) de la partie d'assemblage (5a) s'écoule le long de l'axe principal (HA) de l'ensemble de soc (3.1, 3.2), la partie d'assemblage (5a) prévue sur le manche de soc (5, 5') étant conçue en forme de connecteur et le dispositif porteur de soc (2) comportant au moins une première et une deuxième parties de logement (2.1, 2.2) en forme de douille, la partie d'assemblage (5a) et les parties de logement (2.1, 2.2) étant aménagées pour créer un assemblage par enfichage respectif et l'ensemble de soc (3.1, 3.2) étant mobile de la position d'arrêt (HS) dans la position de travail (AS) par une permutation de la première dans la deuxième partie de logement (2.1, 2.2) en forme de douille.

10. Module de soc cultivateur (1) selon l'une quelconque des revendications précédentes, **caractérisé en ce que** pour fixer l'ensemble de soc (3.1, 3.2) dans les position d'arrêt (HS) et position de travail (AS) respectives, des goujons d'enfichage sont prévus en supplément, le dispositif porteur de soc (2) et la partie d'assemblage (5a) étant équipés d'orifices de passage correspondants, destinés à faire passer les goujons d'enfichage.

11. Module de soc cultivateur (1) selon l'une quelconque des revendications précédentes, **caractérisé en ce que** le dispositif porteur de soc (2) et la partie d'assemblage (5a) sont aménagés pour une fixation par complémentarité de forme de l'ensemble de soc (3.1, 3.2) dans les position d'arrêt (HS) et position de travail (AS) respectives.

12. Module de soc cultivateur (1) selon l'une quelconque des revendications précédentes, **caractérisé en ce que** le dispositif porteur de soc (2) est conçu pour être vissé avec le dispositif de raccordement du cadre porteur de l'appareil de travail du sol.

13. Appareil de travail du sol (10) doté d'au moins un module de soc cultivateur (1) selon les revendications 1 à 12, comprenant au moins un cadre porteur (11), sur lequel des dispositifs de raccordement (12) sont prévus sur au moins une rangée s'écoulant à la transversale d'un axe longitudinal (LA) de l'appareil de travail du sol (10), l'au moins un module de soc cultivateur (1) étant assemblé avec l'un des dispositifs de raccordement (12).
